# EUROPÄISCHE PATENTSCHRIFT

(11) **EP 3 811 062 B1**
(45) Veröffentlichungstag und Bekanntmachung des Hinweises auf die Patenterteilung: **02.11.2022**
(21) Anmeldenummer: 19732934.5
(22) Anmeldetag: 14.06.2019
(51) Int. Cl.: G01N 21/85, G01N 21/64, G01N 21/65, G01N 21/89

(54) **VORRICHTUNG UND VERFAHREN ZUR SORTIERUNG VON PULVERFÖRMIGEM ODER STÜCKFÖRMIGEM MATERIAL**
APPARATUS AND METHOD FOR SORTING OF POWDERED OR GRANULAR MATERIAL
DISPOSITIF ET PROCÉDÉ POUR TRIER DES MATÉRIAUX SOUS FORME PULVÉRULENTE OU EN MORCEAUX

(30) Priorität: 20.06.2018 DE 102018210015
(43) Veröffentlichungstag der Anmeldung: 28.04.2021
(73) Patentinhaber: Fraunhofer-Gesellschaft zur Förderung der angewandten Forschung e.V., 80686 München (DE)
(72) Erfinder: WOLLMANN Philipp, 0119 Dresden (DE); GRÄHLERT, Wulf, 01277 Dresden (DE); LEICHNIG, Steffen, 09430 Scharfenstein (DE); SCHWARZE, Jörg, 99947 Bad Langensalza (DE)
(74) Vertreter: Pfenning, Meinig & Partner mbB
(86) Internationale Anmeldenummer: PCT/EP2019/065743
(87) Internationale Veröffentlichungsnummer: WO 2019/243200

(56) Entgegenhaltungen:
- WO-A1-2015/063300
- WO-A1-2018/041902
- JP-A- 2013 127 422
- US-A1- 2013 126 399
- US-A1- 2018 056 334
- US-B1- 6 509 537
- US-B2- 7 816 616
- ABRAHAM VÁZQUEZ-GUARDADO ET AL: "Multi-spectral infrared spectroscopy for robust plastic identification", APPLIED OPTICS, Bd. 54, Nr. 24, 18. August 2015 (2015-08-18), Seite 7396, XP055537507, WASHINGTON, DC; US ISSN: 0003-6935, DOI: 10.1364/AO.54.007396

## Beschreibung

Die Erfindung betrifft eine Vorrichtung und ein Verfahren zur Sortierung von pulverförmigem oder stückförmigem Material. Dabei kann es sich insbesondere um unterschiedliche Polymermaterialien, auch Verbundmaterialien oder wasserhaltiges Pulver, Granulate oder Stücke handeln. Sie ist insbesondere für eine farb- und sortenreine Sortierung von Materialien, die schwarz oder überwiegend schwarz sind, geeignet.

Die Patentschriften US 2018/056334 A1 und JP 2013 127422 A offenbaren Vorrichtungen zum optischen Identifizieren und zur Sortierung von stückförmigen Materialien.

Dies beinhaltet insbesondere Werkstoffe oder Materialien, bei denen herkömmliche spektrale Systeme oder machine vision Lösungen scheitern und die bislang aufgrund Ihrer Eigenschaften noch nicht sortenrein wieder aufgetrennt werden können . Eigenschaften, die eine zuverlässige Erfassung verhindern sind:
a) gleiche Farbe → dies kann meist durch spektrale Erfassung gelöst werden
b) Werkstoffe, die sich spektral z. B. durch Wassergehalt oder Kohlenstoffgehalt (Ruß) bislang in relevanten Spektralbereichen nicht unterscheiden lassen

Gleichzeitig muss für eine hochreine Sortierung auch die Gesamtkonzeption der Anlage von der Aufgabe der Stoffe bis zur Trennung beachtet werden. Aktuell zählt z.B. in Deutschland auch die thermische Verwertung (Verbrennung) zum Recycling. Insbesondere bei hochwertigen, schwarzen technischen Kunststoffen gelingt die hochwertige Wiederverwendung (und damit die hochreine Sortierung) bislang nicht.

Können insbesondere schwarze technische Kunststoffe vor Ort sortenrein (>99,9 %) erkannt und darauf basierend sortenrein sortiert werden, besteht ein enormes Wertschöpfungspotenzial, da pro Kilogramm zum Teil mehr als 1,- € Ertrag in der recyclierten Fraktion erlöst werden kann.

So ist insbesondere die Sortierung von mehreren gemeinsam nebeneinander vorliegenden schwarzen Polymeren (z. B: PA6, PA6.6, PBT) interessant. Keine bislang verfügbare Erkennungs- bzw. Sortierlösung bietet bisher eine solche Möglichkeit.

Kunststoffe (dabei insbesondere wieder schwarze technische), die nicht wiederverwendet wurden, sind entweder in Deutschland thermisch verwertet worden oder in Billiglohnländer exportiert. Dort wurden die Kunststoffe manuell (per Hand) aufgebrochen und sortiert.

Andere Sortierlösungen nutzen bislang ebenso schon eine spektrale Erkennung, die unter Anregung von breitbandiger Strahlung jedoch für schwarze Kunststoffe ungeeignet ist (bzw. Lösungen mit spektraler Erfassung im mittleren Infrarot, die jedoch durch spezielle Detektoren um den Faktor 5-10 mal teurer und unrentabel sind). Ebenso gibt es Lösungen unter Fluoreszenzanregung, die jedoch nicht spektral arbeiten.

Mit bekannten Geräten können entweder einzelne schwarze Polymere (aus 'bunten' Proben) erkannt oder schwarze Polymere nur mit geringerer Reinheit sortiert werden (Reinheiten < 90%), die sich nicht für einen technischen Wiedereinsatz eignet.

Es ist daher Aufgabe der Erfindung, Möglichkeiten für eine sortenreine, insbesondere unter der Berücksichtigung des Materials reine Möglichkeit für eine Sortierung von Partikeln oder Stücken anzugeben, die ausreichend präzise funktionieren und insbesondere auch automatisiert durchgeführt werden können.

Erfindungsgemäß wird diese Aufgabe mit einer Vorrichtung, die die Merkmale des Anspruchs 1 aufweist, gelöst. Anspruch 11 definiert ein Verfahren. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung zur Sortierung von pulverförmigen, granulatförmigen oder stückförmigen Material sind Partikel oder Stücke unterschiedlicher Materialien in vereinzelter Form in Richtung einer zur Separation unterschiedlicher Partikel oder Stücke ausgebildeten Einrichtung geführt.

Mit einem Strahl, der von einer Laserstrahlquelle emittiert wird, sind die Partikel oder Stücke so bestrahlt, dass an Oberflächen des Materials der Partikel oder Stücke eine Generierung von Raman- oder Fluoreszenzstrahlung erfolgt.

Die generierte Raman- oder Fluoreszenzstrahlung ist auf ein zur ortsaufgelösten Erfassung dieser Strahlung ausgebildetes Detektorarray gerichtet. Dabei können Detektoren des Detektorarrays in einer Reihenanordnung, die parallel zur Vorschubbewegungsrichtung eines Stromes von Partikeln oder Stücken ausgerichtet sind, oder in einer Reihen- und Spaltenanordnung angeordnet sein, mit der eine Erfassung über die Breite des Stromes möglich ist, angeordnet sein. Eine spektrale Erfassung von Raman- oder Fluoreszenzstrahlung sollte über die gesamte Breite des Stromes möglich sein.

Auf die Partikel, Granulate oder Stücke ist zumindest annähernd monochromatische elektromagnetische Strahlung, deren zentrale Wellenlänge so gewählt ist, dass keine Beeinflussung der Raman- oder Fluoreszenzstrahlung bei der Detektion erfolgt, über die Breite der vereinzelten Partikel oder Stücke, die von mehreren diese elektromagnetische Strahlung emittierenden Dioden emittiert ist, gerichtet.

Die einzelnen Detektoren des Detektorarrays sind zur ortsaufgelösten Erfassung von den Partikeln oder Stücken reflektierten oder gestreuten elektromagnetischen Strahlung ausgebildet.

Zwischen den Partikeln oder Stücken und dem Detektorarray ist ein optisches Filter oder ein Strahlteiler angeordnet, das/der so ausgebildet ist, dass elektromagnetische Strahlung mit der Wellenlänge des Strahls nicht auf die Detektoren des Detektorarrays auftrifft. Ein optischer Filter kann dabei ein Bandpass- oder Kantenfilter sein. Mit einem Strahlteiler kann elektromagnetische Strahlung aus dem Wellenlängenbereich der Laserstrahlung des Laserstrahls so abgelenkt werden, dass dieser Wellenlängenbereich der Laserstrahlung nicht auf Detektoren des Detektorarrays auftreffen kann.

Die Bestrahlung und Detektion erfolgt während einer Relativbewegung zwischen den Partikeln oder Stücken, dem Fokusbereichs des Strahls, den elektromagnetische Strahlung emittierenden Dioden und den Detektoren des Detektorarrays. In der Regel werden die Partikel, Granulate oder Stücke bewegt und alle anderen genannten Komponenten können starr befestigt sein.

Zumindest die Detektoren des Detektorarrays sind an eine elektronische Auswerteeinheit angeschlossen. Die elektronische Auswerteeinheit ist zur orts- und spektralaufgelösten Auswertung von mit den Detektoren des Detektorarrays erfassten Intensitäten der Raman- oder Fluoreszenzstrahlung und der reflektierten elektromagnetischen Strahlung der Dioden sowie einer Durchführung einer spektralen Analyse und/oder einer Bildanalyse zur Bestimmung der Form- und Positionserkennung einzelner Partikel oder Stücke ausgebildet.

Die elektronische Auswerteeinheit ist mit einer Steuerung für die Einrichtung, die zur Separation unterschiedlicher Partikel, Granulate oder Stücke ausgebildet ist, verbunden.

Der Strahl zur Anregung von Raman- oder Fluoreszenzstrahlung kann mittels mindestens eines um mindestens eine Achse schwenkbaren oder drehbaren reflektierenden Elements oder mittels einer linienförmigen optischen Linse, über die Breite in der Partikel oder Stücke angeordnet sind, gerichtet sein. Bei schwenkbaren reflektierenden Elementen kann es sich um so genannte Scanner- oder Galvo-Spiegel handeln, möglich sind auch Liniengeneratorlinsen. Ein drehbares reflektierendes Element kann über seinen Umfang verteilt mehrere ebene reflektierende Flächen aufweisen, auf die ein Strahl sukzessive während der Drehung gerichtet werden kann. Es kann die Form eines Polygonspiegels haben.

Ein um mindestens eine Achse schwenkbares oder ein um eine Rotationsachse drehbares reflektierendes Element sollte so ausgebildet oder ansteuerbar sein, dass die Bewegung des Fokusbereichs des Strahls bei der Generierung von Raman- oder Fluoreszenzstrahlung mit einer Frequenz erfolgt, die größer als die Frequenz ist, mit der die Detektion erfolgt.

Das zu sortierende das Material der Partikel oder Stücke sollte zumindest zu 50 % schwarz eingefärbt sein oder schwarze Bestandteile mit mindestens 50 % enthalten. Bevorzugt sind dabei zumindest 90 %.

Die elektronische Auswerteeinheit sollte vorteilhaft zur Erkennung spektraler Intensitätsunterschiede von mit Detektoren erfassten Intensitäten mindestens einer Wellenlänge und/oder zur Extraktion von Parametern, insbesondere mittels einer multivariaten Datenanalyse, bevorzugt mit einer Hauptkomponentenanalyse, Diskriminanzanalyse, Stützvektormethode, einem neuronalen Netz, einer Clusteranalyse, eines random forests Modells ausgebildet sein.

Eine Beschleunigung des Pulver-, Granulat oder Stückgutstromes kann mit einer schiefen Ebene zur Erreichung einer Abwärtsbewegung der Partikel oder Stücke erreicht werden. Dabei kann die schiefe Ebene Bestandteil der Einrichtung, die zur Separation unterschiedlicher Partikel, Granulate oder Stücke ausgebildet ist, sein.

Es kann ein Bereich zur definierten Separation von Partikeln oder Stücken in Bewegungsrichtung der Partikel oder Stücke nachfolgend an einen Bereich, der zur Detektion der Form und Position einzelner Partikel, Granulate oder Stücke ausgebildet ist, angeordnet sein. Dabei gelangt der Strom an zu sortierenden Partikeln oder Stücken im Nachgang zur Bestimmung der Art, Form und möglichen Position von einzelnen Partikeln oder Stücken erst nach, bevorzugt unmittelbar nach der Detektion in den Bereich, in dem die eigentliche Sortierung mittels Separation unterschiedlicher Materialien voneinander durchgeführt wird.

In dem Bereich zur definierten Separation unterschiedlicher Partikel, Granulate oder Stücke kann vorteilhaft ein gasdurchlässiger Boden, auf dem zu separierende Partikel oder Stücke angeordnet oder bewegbar sind, vorhanden sein. Unter dem Boden können einzeln ansteuerbare Blasdüsen vorhanden sein, die so angesteuert werden können, dass Partikel oder Stücke aus unterschiedlichen Materialien voneinander durch ein lokal definiertes Öffnen oder Geschlossenhalten von Blasdüsen separierbar sind. Dabei besteht auch zusätzlich die Möglichkeit über den aus dem Blasdüsen austretenden Volumenstrom oder Druck eines Gases die Bewegung von aussortierten Partikeln oder Stücken zu beeinflussen, so dass sie in ein dafür vorgesehenes Behältnis gelangen können.

Eine Separation von Partikeln, Granulaten oder Stücken aus dem Strom, die im Bereich zur definierten Separation angeordnet sind, kann auch mit einzeln ansteuerbaren piezoelektrisch gesteuerten Membranen erfolgen. Durch die Bewegung einzelner Membrane können einzelne Partikel oder Stücke allein durch die kinetische Energie der Membran oder eine damit initiierte Gasdruckwelle in ein jeweils dafür vorgesehenes Behältnis bewegt werden.

Für einen Bereich definierter Separation kann für die Separation von Partikeln, Granulaten oder Stücken oberhalb des Partikel-, Granulat- oder Stückgutstromes eine Absaugeinrichtung, die für eine kontinuierliche, laminare Absaugung ausgebildet ist, angeordnet sein.

Es können mehrere Bereiche definierter Separation, die hintereinander und/oder nebeneinander im Partikel-, Granulat- oder Stückgutstrom angeordnet sind, genutzt werden.

Ein Strom von Partikeln oder Stücken kann auch geführt bewegt werden. Dazu kann er in Spuren, die beispielsweise mit Rinnen und/oder seitlichen Banden gebildet werden können, translatorisch bewegt werden.

Für die Detektion können klassische Hyperspectral Image Systeme (HSI-Systeme) genutzt werden. Dabei können preiswerte Detektoren auf Silizium-Basis eingesetzt werden. Die jeweiligen zu sortierenden Proben können mit Hilfe eines Laserstrahls optisch, berührungslos angeregt werden. Je nach Material kommt es dabei zur Anregung von RAMAN-Streuung oder Fluoreszenz. Die Laserwellenlänge sollte so ausgewählt werden, dass
a) im optimalen Bereich des Detektors die Signale der RAMAN-Streuung/Fluoreszenz erfasst werden können (der Bereich mit der höchsten Quanteneffizienz)
b) ein weiterer Bereich des Detektors für die Formerkennung genutzt werden kann, die Zentralwellenlänge (ZWL) der Zeile mit den zumindest annähernd monochromatische Strahlung emittierenden Dioden kann so gewählt werden, dass keine Beeinflussung der mit Detektoren erfassten RAMAN/Fluoreszenzsignale erfolgt

So können beispielsweise Detektoren, die in einem Wellenlängenbereich zwischen 400 nm - 1000 nm empfindlich sind, bei Laserstrahlung mit einer Wellenlänge von 532 nm eingesetzt werden. Die Detektion von RAMAN/Fluoreszenz kann bis ca. 700 nm erfolgen und Dioden mit ZWL von 850 nm können für eine Bildanalyse genutzt werden.

Die spektral auf den einzelnen Detektoren erfassten Daten können getrennt verarbeitet werden.
a) Auswertung der (Raman-/Fluoreszenz)Spektren
b) Separierung der Daten aus der Dioden-Anregung zur Form- und Lage/Positionserkennung bzw. zur Bildanalyse

Aus den mit den Detektoren ortsaufgelöst erfassten Spektren können die für die jeweilige Aufgabe notwendigen Parameter extrahiert werden. Diese können sowohl aus spektralen Intensitätsunterschieden (bei einer oder mehrerer Wellenlängen) gewonnen werden, als auch als eindeutiges Kriterium einer multivariaten Datenanalyse (z.B. Hauptkomponentenanalyse, Diskriminanzanalyse, Stützvektormethode, Clusteranalyse, random forest Modelle, neuronale Netze [deep learning Methoden]).

Die ermittelten Form- und Positions-/Lageparameter bzw. gewonnenen Daten aus der Bildanalyse können wiederum gemeinsam mit den aus der spektralen Auswertung gewonnenen Erkenntnissen für eine weitergehende Probenklassifizierung/Probenbewertung genutzt werden.
- Der Einsatz der Hyperspektraltechnik bzw. bildgebender Spektroskopie ermöglicht die flächige (lateral aufgelöste) Charakterisierung anhand
   ∘ der Auswertung von Spektren (Transmission oder(/und) Reflexion), die gleichzeitig an unterschiedlichen Orten der mit Partikeln oder Stücken gebildeten Probe gemessen wurden (hier in einer Linie)
   ∘ einer Relativbewegung Probe/Detektorarray
- Voraussetzungen
   ∘ der Laserstrahl (kohärente, monochromatische Punktquelle) kann mittels eines Scannerspiegels (Galvanoscanner oder Rotationsspiegel) über die Breite des mit Partikeln oder Stücken gebildeten Stromes geführt werden, was mit deutlich höherer Geschwindigkeit als die Aufnahmefrequenz erfolgen sollte
      ▪ alternativ kann auch eine optische Linienlinse verwendet werden, damit sinkt die pro Ortspunkt punktuell, pro Zeiteinheit eingebrachte Intensität
   ∘ der Laserstrahl kann schräg (siehe Abbildung) oder senkrecht über einen dichroitischen Strahlteiler eingebracht werden
   ∘ ein optisches Kanten- oder Notchfilter kann vor dem HSI-System angeordnet sein, mit dem die Anregungswellenlänge für die Detektoren ausgeblendet werden kann, da es sonst zu Überbelichtung und Signalüberlagerung kommen kann
   ∘ die Zeile der emittierenden Dioden kann einseitig oder zweiseitig der Beobachtungslinie eingebracht werden, der Winkel ist variabel (ggf. muss Abschattung beachtet werden)

Vor der Sortierung , insbesondere von Kunststoff-Bauteilen, können diese geschreddert und anschließend möglichst kryogen gemahlen werden. Das kryogene Mahlen ermöglicht eine weitestgehend homogene Größenverteilung von Partikeln, Granulaten oder Stücken der zerkleinerten Bauteile. Unter- und Überkorn können anschließend abgesiebt werden. Die Polymerpartikel können nachfolgend z.B. von einer Rüttelplatte auf eine Rutsche als schiefe Ebene aufgebracht und über diese annähernd auf die Bandgeschwindigkeit vorbeschleunigt werden. Eine Spurführung kann dabei für eine weitere Trennung der Polymerpartikel oder Stücke genutzt werden.
Neben der optimalen Aufbringung und Erkennung ist die Ausschleusung ein weiterer Schwerpunkt, um die Reinheit einer Material-, insbesondere der Polymerfraktionen sicher stellen zu können. Herkömmliche Systeme arbeiten i.d.R. mit Ausblasen aus der Flugkurve an einem Bandende oder dem Ende einer schiefen Ebene. Durch elektrostatische Anhaftung, unterschiedliche geometrische Ausprägung wird die Flugbahn jedoch beeinflusst, was zum Eintrag von Fehlsortierungen führen kann. Zudem ist dabei die Anzahl der Sortierstufen begrenzt.
Um dies zu umgehen, kann eine andere Variante zur Ausschleusung der Partikel oder Stücke aus unterschiedlichen Materialien, insbesondere unterschiedlicher Polymere gewählt werden. Als Bandmaterial an der Einrichtung, die zur Separation unterschiedlicher Partikel. Granulate oder Stücke ausgebildet ist, kann beispielsweise ein gitterförmiges, gasdurchlässiges Metallgewebeband genutzt werden. Unterhalb dieses Bandes können gesteuerte Düsen angebracht sein, die bevorzugt spurgetreu die Partikel oder Stücke im Strom anblasen können, damit sie sich vom Band lösen (alternativ kann auch ein Druckluftstoß aus Piezogesteuerten Membranen genutzt werden). Oberhalb des Bandes kann eine spaltförmige Absaugung angebracht sein, an der kontinuierlich ein Laminarstrom anliegt (und die gesamte Breite des Bandes mit dem Partikel- oder Stückstrom abdeckt). Die Absaugung kann zudem mit Leitblechen ausgestattet sein, so dass ein ungewolltes Abprallen und Zurückfallen der aussortierten Partikel oder Stücke auf das Band verhindert werden kann. Vorteil an einer Absaugung im Laminarstrom ist das Fehlen sämtlicher, verschleißanfälliger Mechanik in der Baugruppe. Die gesamte Absaugstufe kann zudem beliebig oft kaskadiert repliziert werden (und steht damit für die Sortierung einer fast beliebigen Anzahl von Fraktionen von Partikeln oder Stücken einer Mischung zur Verfügung).
Die Steuerung der Ausschleusung kann anhand der Ergebnisse der Erkennung unterschiedlicher Partikel, Granulate oder Stücke mit Hilfe der mit den Detektoren erfassten Messsignale und deren Auswertung mit der elektronischen Auswerteeinheit erfolgen. So können Lage- /Positionsinformation/Spur, Zeitstempel und Klassifikationsergebnis genutzt werden. Bei bekannter Bandgeschwindigkeit kann dann die jeweilige Absaugstufe und -düse korrekt angesteuert werden, wenn neben der Vorschubgeschwindigkeit der mit dem Strom bewegten Partikel oder Stücke auch der jeweilige Abstand zwischen der Position, an die jeweiligen Messsignale mit mindestens einem Detektor erfasst worden sind, und dem Ort, an dem die Aussortierung erfolgen soll, bekannt ist.

Mit der Erfindung kann eine gleichzeitige Sortierung verschiedener Partikel, Granulate oder Stücke, insbesondere schwarzer Polymerfraktionen erreicht werden. Es kann eine hohe Reinheit einzelner sortierter Fraktionen, insbesondere schwarzen Polymerfraktionen für einen hoch-technischen Wiedereinsatz (High-Cycling) und daraus resultierend hohe Marktpreise beim Wiedereinsatz erreicht werden. Kleine Partikelgrößen können durch kryogenes Mahlen (beim Einsatz für schwarze Polymere) erhalten werden, was den Eintrag größerer Fehlfraktionen bei Mischpartikeln (z.B. bei geklebten Bauteilen) verhindern kann. Es fallen relativ kleine Betriebskosten, insbesondere wegen der Automatisierbarkeit an. Je nach gewünschter Kapazität ist eine Skalierbarkeit möglich.

Die Ausschleusung von aussortierten Partikeln oder Stücken kann ohne mechanische Verschleißteile erreicht werden, was die Langlebigkeit und Wartungsfreundlichkeit verbessert.

Durch die intrinsische Kombination aus maschineller Bildgebung (Dioden-Zeilen) und bildgebender Spektroskopie (HSI-System) für die Sortierung kann eine komplexe Ermittlung von Sortiermerkmalen, insbesondere unter Einbeziehung von Form/ Gleichmäßigkeit der unterschiedlichen Partikel oder Stücke erreicht werden.

Nachfolgend soll die Erfindung beispielhaft näher erläutert werden.

Dabei zeigt:

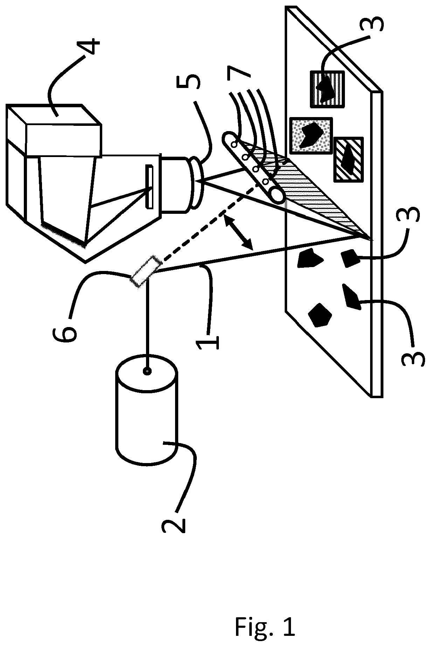

Figur 1 ein Beispiel einer erfindungsgemäßen Vorrichtung in schematischer Darstellung.

In Figur 1 ist lediglich der optische Teil der Vorrichtung gezeigt und es ist auf die Darstellung der Einrichtung, die zur Separation unterschiedlicher Partikel, Granulate oder Stücke 3 ausgebildet ist, sowie die elektronische Auswerteinheit verzichtet worden.

Mit einer Laserstrahlungsquelle 2 wird ein Strahl 1 mit einer Wellenlänge von 532 nm über ein um eine Achse schwenkbares den Strahl 1 reflektierendes Element 6 über einen Strom, der mit Stücken 3, die durch Zerteilung eines Bauteils aus Automotive-Anwendungen erhalten worden sind, gerichtet. Der Fokusbereich des Strahls 1 wird dabei über die gesamte Breite des sich in eine Richtung bewegenden Stromes, der mit den Stücken 3 gebildet ist, gerichtet. Die Bewegung des Fokusbereichs erfolgt dabei senkrecht zur Vorschubbewegungsrichtung des Stromes. Durch diese Bestrahlung wird Ramanstreuung generiert und Fluoreszenz angeregt.

Gleichzeitig erfolgt eine linienförmige Bestrahlung des Stromes mit elektromagnetischer Strahlung, die von einer Reihenanordnung von Dioden 7 emittiert wird. Diese elektromagnetische Strahlung hat eine Zentralwellenlänge von 850 nm und eine Streuung um diese Wellenlänge von ± 10 %. Bevorzugt erfolgt diese Bestrahlung im Bereich, in dem keine Ramanstreuung bzw. Fluoreszenzstrahlung generiert worden ist.

Oberhalb des bestrahlten Bereichs ist ein Detektorarray 4 angeordnet, das mit mehreren in einer Reihen- oder in einer Reihen- und Spaltenanordnung angeordneten Detektoren gebildet ist. Die Detektoren sind so ausgebildet, dass sie eine orts- und spektralaufgelöste Erfassung von Intensitäten ermöglichen.

Es ist somit eine spektrale ortsaufgelöste Analyse und eine ortsaufgelöste Bildanalyse möglich.

Die Messsignale der einzelnen Detektoren werden einer nicht dargestellten elektronischen Auswerteeinheit zugeführt, mit der eine Auswertung und Steuerung der Sortierung mittels definierter Separation von Stücken 3 aus bestimmten Materialien, wie im allgemeinen Teil der Beschreibung erläutert, durchgeführt werden kann.

Um eine nahezu störungsfreie Detektion der Messsignale zu ermöglichen ist zwischen dem mit dem Strahl 1 bestrahlten Bereich und dem Detektorarray 4 ein optisches Filter 5 angeordnet, mit dem verhindert werden kann, dass reflektierte und gestreute Laserstrahlung auf die Detektoren des Detektorarrays 4 auftreffen und die eigentlichen Messsignale negativ beeinträchtigen kann. Das optische Filter 5 ist bei diesem Beispiel ein Kantenfilter, das lediglich für elektromagnetische Strahlung mit Wellenlängen größer von 532 nm nahezu vollständig transparent ist.

Die Auswertung kann mittels PC erfolgen, wobei die Steuerung nicht an die Auswertung gekoppelt sein muss. Die erfassten Daten des Detektors müssen über eine ausreichend schnelle Datenverbindung übertragen werden. Die Software muss in der Lage sein, die Daten mit der Geschwindigkeit der Erfassung auszuwerten. Die Vorgehensweise zur Auswertung kann dabei fest definiert als ,Rezept' vorliegen, oder sie ist vorab frei definiert worden. Idealerweise werden nur die Ergebnisse der Auswertung gespeichert, die Originaldaten werden verworfen. Für die Separierung werden neben dem Ergebnis der Erkennung möglichst weitere Daten wie Lageinformation und Zeitstempel weitergegeben.

## Patentansprüche

1. Vorrichtung zur Sortierung von pulverförmigen, granulatförmigen oder stückförmigen Material, welche Vorrichtung eine zur Separation unterschiedlicher Partikel oder Stücke ausgebildete Einrichtung umfasst, wobei bei der Vorrichtung Partikel, Granulate oder Stücke unterschiedlicher Materialien in vereinzelter Form in Richtung der zur Separation unterschiedlicher Partikel oder Stücke (3) ausgebildeten Einrichtung geführt sind, wobei die Einrichtung eine Laserstrahlquelle, ein ortsaufgelöstes Detektorarray, eine elektronische Auswerteeinheit und eine Steuerung umfasst, wobei die Laserstrahlquelle mehrere Strahlung emittierende Dioden umfasst, und die Einrichtung derart gestaltet ist, dass
die Partikel, Granulate oder Stücke mit einem Strahl (1), der von der Laserstrahlquelle (2) emittiert wird,
bestrahlt sind, so dass an Oberflächen des Materials der Partikel oder Stücke (3) eine Generierung von Raman- oder Fluoreszenzstrahlung erfolgt und
die generierte Raman- oder Fluoreszenzstrahlung auf das zur ortsaufgelösten Erfassung dieser Strahlung ausgebildetes Detektorarray (4) gerichtet ist und
der von der Laserstrahlquelle auf die Partikel, Granulate oder Stücke (3) emittierte Strahl zumindest annähernd eine monochromatische elektromagnetische Strahlung ist, deren zentrale Wellenlänge so gewählt ist, dass keine Beeinflussung der Raman- oder Fluoreszenzstrahlung bei der Detektion erfolgt, und diese Strahlung über die Breite der vereinzelten Partikel Granulate oder Stücke (3) gerichtet ist und
die einzelnen Detektoren des Detektorarrays (4) zur ortsaufgelösten Erfassung von den Partikeln, Granulaten oder Stücken (3) reflektierten oder gestreuten elektromagnetischen Strahlung ausgebildet sind und zwischen den Partikeln, Granulaten oder Stücken (3) und dem Detektorarray (4) ein optischer Filter (5) oder ein Strahlteiler angeordnet ist, das/der so ausgebildet ist, dass elektromagnetische Strahlung mit der Wellenlänge des Strahls (1) nicht auf die Detektoren des Detektorarrays (4) auftrifft;
wobei die Bestrahlung und Detektion während einer Relativbewegung zwischen den Partikeln, Granulaten oder Stücken (3), dem Fokusbereich des Strahls (1), den elektromagnetische Strahlung emittierenden Dioden (7) und den Detektoren des Detektorarrays (4) erfolgt und zumindest die Detektoren des Detektorarrays (4) an die elektronische Auswerteeinheit angeschlossen sind und
die elektronische Auswerteeinheit zur orts- und spektralaufgelösten Auswertung von mit den Detektoren des Detektorarrays erfassten spektralen Intensitäten der Raman- oder Fluoreszenzstrahlung sowie einer Durchführung einer Bildanalyse zur Bestimmung der Form- und Positionserkennung einzelner Partikel, Granulate oder Stücke (3) ausgebildet und mit der Steuerung für die Einrichtung, verbunden ist.

2. Vorrichtung nach Anspruch 1, **dadurch gekennzeichnet, dass** der Strahl (1) mittels eines um mindestens eine Achse schwenkbaren oder drehbaren reflektierenden Elements (6) oder mittels einer linienförmigen optischen Linse, über die Breite in der Partikel oder Stücke (3) angeordnet sind, gerichtet ist.

3. Vorrichtung nach einem der vorhergehenden Ansprüche, **dadurch gekennzeichnet, dass** die elektronische Auswerteeinheit zur Erkennung spektraler Intensitätsunterschiede von mit Detektoren erfassten Intensitäten mindestens einer Wellenlänge und/oder zur Extraktion von Parametern, insbesondere mittels einer multivariaten Datenanalyse, bevorzugt mit einer Hauptkomponentenanalyse, Diskriminanzanalyse, Stützvektormethode, einem neuronalen Netz, einer Clusteranalyse, einem Random Forest Modell ausgebildet ist.

4. Vorrichtung nach einem der vorhergehenden Ansprüche, **dadurch gekennzeichnet, dass** ein um mindestens eine Achse schwenkbares oder ein um eine Rotationsachse drehbares reflektierendes Element so ausgebildet oder ansteuerbar ist, dass die Bewegung des Fokusbereiches des Strahls (1) bei der Generierung von Raman- oder Fluoreszenzstrahlung mit einer Frequenz erfolgt, die größer als die Frequenz ist, mit der die Detektion erfolgt.

5. Vorrichtung nach einem der vorhergehenden Ansprüche, **dadurch gekennzeichnet, dass** die Beschleunigung der Pulver, Granulate oder Stücke auf einer schiefen Ebene zur Erreichung einer Abwärtsbewegung der Partikel oder Stücke (3) erfolgt, wobei
die schiefe Ebene bevorzugt Bestandteil der Einrichtung, die zur Separation unterschiedlicher Partikel oder Stücke (3) ausgebildet ist, ist.

6. Vorrichtung nach einem der vorhergehenden Ansprüche, **dadurch gekennzeichnet, dass** ein Bereich zur definierten Separation von Partikeln Granulate oder Stücken (3) in Bewegungsrichtung der Partikel oder Stücke (3) nachfolgend an einem Bereich, der zur Detektion der Form und Position einzelner Partikel oder Stücke (3) ausgebildet ist, angeordnet ist.

7. Vorrichtung nach dem vorhergehenden Anspruch, **dadurch gekennzeichnet, dass** in dem Bereich zur definierten Separation unterschiedlicher Partikel oder Stücke (3) ein gasdurchlässiger Boden, auf dem zu separierende Partikel, Granulate oder Stücke (3) angeordnet oder bewegbar sind, und unter dem Boden einzeln ansteuerbare Blasdüsen vorhanden sind, die so ansteuerbar sind, dass Partikel, Granulate oder Stücke (3) aus unterschiedlichen Materialien voneinander durch ein lokal definiertes Öffnen oder Geschlossenhalten von Blasdüsen separierbar sind.

8. Vorrichtung nach einem der zwei vorhergehenden Ansprüchen, **dadurch gekennzeichnet, dass** eine Separation von Partikeln, Granulaten oder Stücken (3), die im Bereich zur definierten Separation angeordnet sind, mit einzeln ansteuerbaren piezoelektrisch gesteuerten Membranen erfolgt.

9. Vorrichtung nach einem der vorhergehenden Ansprüche, **dadurch gekennzeichnet, dass** oberhalb des Bereichs definierter Separation eine Absaugeinrichtung, die für eine kontinuierliche und laminare Absaugung ausgebildet ist, angeordnet ist.

10. Vorrichtung nach einem der vorhergehenden Ansprüche, **dadurch gekennzeichnet, dass** mehrere Bereiche definierter Separation hintereinander und/oder nebeneinander angeordnet sind.

11. Verfahren zur Sortierung von pulverförmigem oder stückförmigem Material, bei dem Partikel, Granulate oder Stücke unterschiedlicher Materialien in vereinzelter Form in Richtung einer zur Separation unterschiedlicher Partikel oder Stücke ausgebildeten Einrichtung geführt werden.
Mit einem Strahl (1), der von einer Laserstrahlquelle (2) emittiert wird, werden Partikel, Granulate oder Stücke (3) so bestrahlt, so dass an Oberflächen des Materials der Partikel, Granulate oder Stücke (3) eine Generierung von Raman- oder Fluoreszenzstrahlung erreicht wird,
die generierte Raman- oder Fluoreszenzstrahlung wird auf ein zur ortsaufgelösten Erfassung dieser Strahlung ausgebildetes Detektorarray (4) gerichtet und
auf die Partikel, Granulate oder Stücke (3) zumindest annähernd monochromatische elektromagnetische Strahlung, deren zentrale Wellenlänge so gewählt ist, dass keine Beeinflussung der Raman- oder Fluoreszenzstrahlung bei der Detektion erfolgt, wird über die Breite der vereinzelten Partikel, Granulate oder Stücke (3), die von mehreren diese elektromagnetische Strahlung emittierenden Dioden (7) emittiert ist, gerichtet und
mit einem zwischen den Partikeln, Granulaten oder Stücken (3) und dem Detektorarray (4) angeordneten optischen Filter (5) oder einem Strahlteiler wird verhindert, dass elektromagnetische Strahlung mit der Wellenlänge des Strahls (1) auf die Detektoren des Detektorarrays (4) auftrifft; wobei die Bestrahlung und Detektion während einer Relativbewegung zwischen den Partikeln, Granulaten oder Stücken (3), dem Brennfleck des Strahls (1), den elektromagnetische Strahlung emittierenden Dioden (7) und den Detektoren des Detektorarrays (4) durchgeführt wird und
zumindest die Detektoren des Detektorarrays (4), die zur ortsaufgelösten Erfassung von den Partikeln oder Stücken (3) reflektierten oder gestreuten elektromagnetischen Strahlung ausgebildet sind an eine elektronische Auswerteeinheit angeschlossen sind und
mit der elektronischen Auswerteeinheit, die zur orts- und spektralaufgelösten Auswertung von mit den Detektoren des Detektorarrays erfassten Intensitäten ausgebildeten sind, wird die ortsaufgelöst erfasste Raman- oder Fluoreszenzstrahlung ausgewertet sowie eine Bildanalyse zur Bestimmung der Form- und Positionserkennung einzelner Partikel, Granulate oder Stücke (3) durchgeführt und
eine Steuerung, die für die Einrichtung, die zur Separation unterschiedlicher Partikel oder Stücke (3) ausgebildet ist, angesteuert, so dass eine Sortierung von Partikeln, Granulaten oder Stücken (3) erreicht wird.

12. Verfahren nach dem vorhergehenden Anspruch, **dadurch gekennzeichnet, dass** Partikel, Granulate oder Stücke (3) vor der Detektion durch einen Mahlprozess, bevorzugt durch kryogenes Mahlen, bei Temperaturen kleiner 0 °C erhalten werden.

## Claims

1. A device for sorting powdered, granular, or piece-form material, which device comprises an apparatus designed for separating different particles or pieces, wherein, in the device, particles, granules, or pieces of different materials are guided in separated form in the direction of the apparatus designed for separating different particles or pieces (3), wherein the apparatus comprises a laser beam source, a spatially resolved detector array, an electronic evaluation unit, and a controller, wherein the laser beam source comprises a plurality of diodes emitting radiation, and the apparatus is configured such that
the particles, granules, or pieces are irradiated by a beam (1) emitted by the laser beam source (2) such that Raman or fluorescence radiation is generated at surfaces of the material of the particles or pieces (3), and
the generated Raman or fluorescence radiation is directed toward the detector array (4) designed for the spatially resolved detection of this radiation, and
the beam emitted by the laser beam source toward the particles, granules, or pieces (3) is at least approximately monochromatic electromagnetic radiation, the central wavelength of which is selected such that there is no influence on the Raman or fluorescence radiation during the detection, and this radiation is directed across the width of the separated particles, granules, or pieces (3), and
the individual detectors of the detector array (4) are designed for the spatially resolved detection of electromagnetic radiation reflected or scattered by the particles, granules, or pieces (3), and
an optical filter (5) or a beam splitter is arranged between the particles, granules, or pieces (3) and the detector array (4) and is designed such that electromagnetic radiation having the wavelength of the beam (1) does not impinge on the detectors of the detector array (4);
wherein the irradiation and detection are performed during a relative movement between the particles, granules, or pieces (3), the focal range of the beam (1), diodes (7) emitting the electromagnetic radiation, and the detectors of the detector array (4), and
at least the detectors of the detector array (4) are connected to the electronic evaluation unit, and
the electronic evaluation unit is designed for the spatially and spectrally resolved evaluation of spectral intensities of the Raman or fluorescence radiation detected by the detectors of the detector array and for performing an image analysis for determining the shape and position recognition of individual particles, granules, or pieces (3), and is connected to the controller for the apparatus.

2. The device according to claim 1, **characterized in that** the beam (1) is directed by means of a reflective element (6) that is pivotable or rotatable about at least one axis, or by means of a linear optical lens across the width in which particles or pieces (3) are arranged.

3. The device according to any of the preceding claims, **characterized in that** the electronic evaluation unit is designed to recognize spectral intensity differences of intensities of at least one wavelength detected by detectors and/or
is designed to extract parameters, in particular by means of a multivariate data analysis, preferably by a principal component analysis, discriminant analysis, support vector method, a neural network, a cluster analysis, or a random forest model.

4. The device according to any of the preceding claims, **characterized in that** a reflective element that is pivotable about at least one axis or that is rotatable about a rotation axis is designed or actuatable such that the focal range of the beam (1) moves when Raman or fluorescence radiation is generated at a frequency that is greater than the frequency at which the detection is performed.

5. The device according to any of the preceding claims, **characterized in that** the powder, granules, or pieces are accelerated on an inclined plane to achieve a downward movement of the particles or pieces (3), wherein
the inclined plane is preferably part of the apparatus which is designed for separating different particles or pieces (3).

6. The device according to any of the preceding claims, **characterized in that** a region for the defined separation of particles, granules, or pieces (3) is arranged downstream of a region which is designed for detecting the shape and position of individual particles or pieces (3) in the movement direction of the particles or pieces (3).

7. The device according to the preceding claim, **characterized in that**, in the region for the defined separation of different particles or pieces (3), there is a gas-permeable base on which particles, granules, or pieces (3) to be separated are arranged or movable, and below the base there are individually actuatable blowing nozzles which are actuatable such that particles, granules, or pieces (3) made of different materials can be separated from one another by opening blowing nozzles or keeping them closed in a locally defined manner.

8. The device according to any of the two preceding claims, **characterized in that** particles, granules, or pieces (3) arranged in the region for the defined separation are separated using individually actuatable piezoelectrically controlled membranes.

9. The device according to any of the preceding claims, **characterized in that** a suction apparatus designed for continuous and laminar suction is arranged above the region for defined separation.

10. The device according to any of the preceding claims, **characterized in that** a plurality of regions for defined separated are arranged behind one another and/or beside one another.

11. A method for sorting powdered, granular, or piece-form material, in which particles, granules, or pieces of different materials are guided in separated form in the direction of an apparatus designed for separating different particles or pieces,
particles, granules, or pieces (3) are irradiated by means of a laser beam (1) emitted by a laser beam source (2) such that a generation of Raman or fluorescence radiation is achieved at surfaces of the material of the particles, granules, or pieces (3),
the generated Raman or fluorescence radiation is directed toward a detector array (4) designed for the spatially resolved detection of this radiation, and
at least approximately monochromatic electromagnetic radiation, the central wavelength of which is selected such that there is no influence on the Raman or fluorescence radiation during the detection, is directed towards the particles, granules, or pieces (3) over the width of the separated particles, granules, or pieces (3), and is emitted by a plurality of diodes (7) emitting this electromagnetic radiation, and
an optical filter (5) or a beam splitter arranged between the particles, granules, or pieces (3) and the detector array (4) is used to prevent electromagnetic radiation having the wavelength of the beam (1) from impinging on the detectors of the detector array (4); wherein the irradiation and detection are performed during a relative movement between the particles, granules, or pieces (3), the focus of the beam (1), the diodes (7) emitting electromagnetic radiation, and the detectors of the detector array (4), and
at least the detectors of the detector array (4) designed for the spatially resolved detection of electromagnetic radiation reflected or scattered by the particles, granules, or pieces (3) are connected to an electronic evaluation unit, and
the electronic evaluation unit, which is designed for the spatially and spectrally resolved evaluation of intensities detected by detectors of the detector array, is used to evaluate the Raman or fluorescence radiation detected in a spatially resolved manner and also to perform an image analysis for determining the shape and position recognition of individual particles, granules, or pieces (3), and
a controller, which is actuated for the apparatus which is designed for separating different particles or pieces (3) such that particles, granules, or pieces (3) are sorted.

12. The method according to the preceding claim, **characterized in that** particles, granules, or pieces (3) are obtained prior to the detection by a grinding process, preferably by cryogenic grinding, at temperatures of less than 0°C.

## Revendications

1. Dispositif pour trier un matériau pulvérulent, granulaire ou en morceaux, lequel dispositif comprend un système réalisé pour séparer des particules ou des morceaux différents, dans lequel avec le dispositif des particules, des granulés ou des morceaux de matériaux différents sont guidés sous forme isolée en direction du système réalisé pour séparer des particules ou des morceaux (3) différents, dans lequel le système comprend une source de faisceau laser, un réseau de détecteurs à résolution spatiale, une unité d'évaluation électronique et une commande, dans lequel la source de faisceau laser comprend plusieurs diodes émettant un rayonnement, et le système est conçu de telle sorte que
les particules, les granulés ou les morceaux sont irradiés avec un faisceau (1), qui est émis par la source de faisceau laser (2), de sorte qu'une génération de rayonnement Raman ou de fluorescence s'effectue sur les surfaces du matériau des particules ou morceaux (3) et
le rayonnement Raman ou de fluorescence généré est dirigé sur le réseau de détecteurs (4) réalisé pour la détection à résolution spatiale de ce rayonnement et
le faisceau émis par la source de faisceau laser sur les particules, les granulés ou les morceaux (3) est au moins approximativement un rayonnement électromagnétique monochromatique dont la longueur d'onde centrale est choisie de telle sorte qu'aucune influence ne s'effectue sur le rayonnement Raman ou de fluorescence lors de la détection, et ce rayonnement est dirigé sur la largeur des particules, des granulés ou des morceaux (3) isolés et
les détecteurs individuels du réseau de détecteurs (4) sont réalisés pour la détection à résolution spatiale du rayonnement électromagnétique réfléchi ou diffusé par les particules, les granulés ou les morceaux (3)
et un filtre optique (5) ou un séparateur de faisceau est disposé entre les particules, les granulés ou les morceaux (3) et le réseau de détecteurs (4), qui est réalisé de telle sorte que le rayonnement électromagnétique avec la longueur d'onde du faisceau (1) n'arrive pas sur les détecteurs du réseau de détecteurs (4) ;
dans lequel l'irradiation et la détection s'effectuent pendant un mouvement relatif entre les particules, les granulés ou les morceaux (3), la zone focale du faisceau (1), les diodes (7) émettant un rayonnement électromagnétique et les détecteurs du réseau de détecteurs (4) et
au moins les détecteurs du réseau de détecteurs (4) sont raccordés à l'unité d'évaluation électronique et
l'unité d'évaluation électronique est réalisée pour l'évaluation à résolution spatiale et spectrale d'intensités spectrales du rayonnement Raman ou de fluorescence détectées avec les détecteurs du réseau de détecteurs ainsi qu'une exécution d'une analyse d'image pour déterminer la reconnaissance de forme et de position de particules, de granulés ou de morceaux (3) individuels et est relié à la commande pour le système.

2. Dispositif selon la revendication 1, **caractérisé en ce que** le faisceau (1) est dirigé au moyen d'un élément réfléchissant (6) pouvant pivoter ou tourner autour d'au moins un axe ou au moyen d'une lentille optique linéaire, sur la largeur dans laquelle sont disposées des particules ou des morceaux (3).

3. Dispositif selon l'une quelconque des revendications précédentes, **caractérisé en ce que** l'unité d'évaluation électronique est réalisée pour la reconnaissance de différences d'intensité spectrale d'intensités détectées avec les détecteurs au moins d'une longueur d'onde et/ou
pour l'extraction de paramètres, en particulier au moyen d'une analyse de données multivariée, de préférence avec une analyse en composantes principales, une analyse discriminante, une méthode des vecteurs de soutien, un réseau neuronal, une analyse par grappes, un modèle de forêt aléatoire.

4. Dispositif selon l'une quelconque des revendications précédentes, **caractérisé en ce qu'**un élément réfléchissant pouvant pivoter autour d'au moins un axe ou pouvant tourner autour d'un axe de rotation est réalisé ou peut être commandé de telle sorte que le mouvement de la zone focale du faisceau (1) lors de la génération du rayonnement Raman ou de fluorescence s'effectue à une fréquence qui est supérieure à la fréquence à laquelle la détection s'effectue.

5. Dispositif selon l'une quelconque des revendications précédentes, **caractérisé en ce que** l'accélération des poudres, des granulés ou des morceaux s'effectue sur un plan incliné pour obtenir un mouvement descendant des particules ou des morceaux (3), dans lequel
le plan incliné fait de préférence partie intégrante du système qui est réalisé pour la séparation de différent(e)s particules ou morceaux (3).

6. Dispositif selon l'une quelconque des revendications précédentes, **caractérisé en ce qu'**une zone pour la séparation définie de particules de granulés ou de morceaux (3) est disposée dans la direction de mouvement des particules ou des morceaux (3) à la suite d'une zone qui est réalisée pour détecter la forme et la position de particules ou de morceaux (3) individuels.

7. Dispositif selon la revendication précédente, **caractérisé en ce que** sont présents dans la zone pour la séparation définie de différent(e)s particules ou morceaux (3) un fond perméable au gaz, sur lequel des particules, des granulés ou des morceaux (3) à séparer sont disposés ou peuvent être déplacés, et sous le fond des buses de soufflage pouvant être commandées individuellement, qui peuvent être commandées de telle sorte que des particules, des granulés ou des morceaux (3) de différents matériaux peuvent être séparés les uns des autres par une ouverture ou un maintien fermé localement défini(e) des buses de soufflage.

8. Dispositif selon l'une des deux revendications précédentes, **caractérisé en ce qu'**une séparation de particules, de granulés ou de morceaux (3), qui sont disposés dans la zone pour une séparation définie, s'effectue avec des membranes commandées piézoélectriquement pouvant être commandées individuellement.

9. Dispositif selon l'une quelconque des revendications précédentes, **caractérisé en ce qu'**un système d'aspiration, qui est réalisé pour une aspiration continue et laminaire, est disposé au-dessus de la zone de séparation définie.

10. Dispositif selon l'une quelconque des revendications précédentes, **caractérisé en ce que** plusieurs zones de séparation définie sont disposées les unes derrière les autres et/ou les unes à côté des autres.

11. Procédé de tri de matériau pulvérulent ou en morceaux, selon lequel des particules, des granulés ou des morceaux de différents matériaux sont guidés sous forme isolée en direction d'un système réalisé pour la séparation de différent(e)s particules ou morceaux,
des particules, des granulés ou des morceaux (3) sont irradiés avec un faisceau (1), qui est émis par une source de faisceau laser (2) de telle sorte qu'une génération de rayonnement Raman ou de fluorescence est obtenue sur les surfaces du matériau des particules, des granulés ou des morceaux (3),
le rayonnement Raman ou de fluorescence généré est dirigé sur un réseau de détecteurs (4) réalisé pour la détection à résolution spatiale de ce rayonnement et
un rayonnement électromagnétique au moins approximativement monochromatique, dont la longueur d'onde centrale est choisie de telle sorte qu'aucune influence du rayonnement Raman ou de fluorescence ne s'effectue lors de la détection, est dirigé sur la largeur des particules, des granulés ou des morceaux (3) isolés sur les particules, granulés ou morceaux (3), qui est émis par plusieurs diodes (7) émettant ce rayonnement électromagnétique, et
avec un filtre optique (5) ou un séparateur de faisceau disposé entre les particules, les granulés ou les morceaux (3) et le réseau de détecteurs (4), on empêche que le rayonnement électromagnétique avec la longueur d'onde du faisceau (1) arrive sur les détecteurs du réseau de détecteurs (4) ; dans lequel l'irradiation et la détection sont exécutées pendant un mouvement relatif entre les particules, les granulés ou les morceaux (3), la tache focale du faisceau (1), les diodes (7) émettant un rayonnement électromagnétique et les détecteurs du réseau de détecteurs (4), et
au moins les détecteurs du réseau de détecteurs (4), qui sont réalisés pour la détection à résolution spatiale du rayonnement électromagnétique réfléchi ou diffusé par les particules ou les morceaux (3), sont connectés à une unité d'évaluation électronique et
avec l'unité d'évaluation électronique, qui est réalisée pour l'évaluation à résolution spatiale et spectrale d'intensités détectées avec les détecteurs du réseau de détecteurs, le rayonnement Raman ou de fluorescence détecté à résolution spatiale est évalué et une analyse d'image est exécutée pour déterminer la reconnaissance de forme et de position de particules, de granulés ou de morceaux (3) individuels et
une commande, qui commande pour le système qui est réalisé pour la séparation de différent(e)s particules ou morceaux (3), de sorte qu'un tri de particules, de granulés ou de morceaux (3) est obtenu.

12. Procédé selon la revendication précédente, **caractérisé en ce que** les particules, les granulés ou les morceaux (3) sont obtenus avant la détection par un processus de broyage, de préférence par broyage cryogénique, à des températures inférieures à 0 °C.
